# EUROPÄISCHE PATENTSCHRIFT

(11) **EP 2 662 267 B1**
(45) Veröffentlichungstag und Bekanntmachung des Hinweises auf die Patenterteilung: **25.05.2016**
(21) Anmeldenummer: 13001639.7
(22) Anmeldetag: 28.03.2013
(51) Int. Cl.: B62D 25/10

(54) **Vorrichtung zum Führen einer Haube einer mobilen Arbeitsmaschine**
Device to guide the hood of a mobile work machine
Dispositif pour guider le capot d'une machine de travail

(30) Priorität: 08.05.2012 DE 102012009124
(43) Veröffentlichungstag der Anmeldung: 13.11.2013
(73) Patentinhaber: BOMAG GmbH, 56154 Boppard (DE)
(72) Erfinder: Jakobs, Stephan, 56283 Gondershausen (DE); Berenz, Andreas, 56823 Büchel (DE)
(74) Vertreter: Heidler, Philipp

(56) Entgegenhaltungen:
- EP-A1- 1 069 029
- EP-A1- 1 475 262
- EP-A1- 2 511 458
- EP-A2- 1 182 119
- WO-A1-80/01481
- JP-A- 2007 008 364
- JP-A- 2011 153 427
- US-A- 2 947 025
- US-A- 5 136 752

## Beschreibung

Die Erfindung betrifft eine Vorrichtung zum Führen einer Haube einer mobilen Arbeitsmaschine, wobei die mobile Arbeitsmaschine einen Maschinenrahmen aufweist, die Haube relativ zu dem Maschinenrahmen zwischen einer offenen und einer geschlossenen Position bewegbar ist, die Vorrichtung ein Angriffselement und ein Führungselement umfasst, das Angriffselement und das Führungselement gelenkig miteinander verbunden sind, das Angriffselement mit der Haube verbunden ist und das Führungselement mit dem Maschinenrahmen verbunden ist oder das Angriffselement mit dem Maschinenrahmen verbunden ist und das Führungselement mit der Haube verbunden ist.

Führungsvorrichtungen für Fahrzeughauben sind beispielsweise aus den Dokumenten US 5,136,752 A, EP 1 069 029 A1, JP 2007 008364 A, JP 2011 153427 A, EP 1 475 262 A1, US 2,947,025 A, EP 1 182 119 A2 und EP 2 511 458 A1 bekannt. In der US 7,766,419 B2 ist eine Gleitblende für ein Fahrzeug beschrieben. Dabei ist ein längliches Element mit dieser Gleitblende verbunden und eingerichtet, in zwei Linearlagern, die mit dem Fahrzeugrahmen verbunden sind, zu gleiten. Alternativ wird empfohlen, das längliche Element an dem Fahrzeugrahmen und die beiden Linearlager an der Gleitblende anzuordnen. Dabei ist das längliche Element derart dimensioniert und angeordnet, dass die Gleitblende zwischen einer geschlossenen und mehreren offenen Positionen über einem Fahrzeugraum bewegt werden kann.

Bei dieser Konstruktion ist es erforderlich, einen großen Bereich am Fahrzeug vorzusehen, in den die Gleitblende beim Öffnen und Schließen des Fahrzeugraums hineingeschoben werden kann. Dadurch ist der Gestaltungsspielraum bei der Konstruktion des Fahrzeugs stark eingeschränkt.

Daraus ergibt sich die Aufgabe, eine Vorrichtung zum Führen einer Haube bereitzustellen, die einen großen Gestaltungsspielraum bei der Konstruktion des Fahrzeugs bietet.

Die Aufgabe wird gelöst durch eine Vorrichtung, bei der das Führungselement eingerichtet ist, einen Punkt der Haube auf einer gekrümmten Bahn zu führen, wobei die Haube als geführtes Glied ausgebildet und auf einer der gekrümmten Bahn entsprechenden Führungsform verschiebbar gelagert ist.

Durch das Führen werden Bewegungen der Haube oder einzelner Punkte der Haube auf vorgegebene Bahnen beschränkt. Vorzugsweise erlaubt das Führen ein Verschwenken in mehrere offene Positionen und eine geschlossene Position. Eine offene Position ist eine Position, in der ein Raum der mobilen Arbeitsmaschine zur Umgebung offen ist. Eine geschlossene Position ist eine Position in der die Haube den Raum verschließt Besonders bevorzugt ist die Haube dazu eingerichtet, eine Serviceöffnung zu bedecken. Diese Serviceöffnung kann eine Öffnung zum Motorraum sein. Vorzugsweise ist die Haube eine Abdeckung. Besonders bevorzugt ist die Vorrichtung ein Führungsgetriebe zum Öffnen und/oder Schließen einer Serviceöffnung. Dabei ist die Haube vorzugsweise ein geführtes Getriebeglied.

Eine mobile Arbeitsmaschine ist ein Fahrzeug, das nach seiner Bauart und seiner mit dem Fahrzeug fest verbundenen Einrichtungen zur Verrichtung von Arbeiten vorgesehen ist. Eine mobile Arbeitsmaschine kann beispielsweise ein Traktor oder ein Radlader sein.

Eine gelenkige Verbindung ist eine bewegliche Verbindung. Durch die Verbindung zugelassene Bewegungen können rotatorische und translatorische Bewegungen umfassen. Vorzugsweise werden Kombinationen von rotatorischen und translatorischen Bewegungen zugelassen. Vorzugsweise bilden Führungselement, Angriffselement und Haube einen Mechanismus.

Eine gekrümmte Bahn ist ein vorgegebener Pfad, der nicht linear verläuft. Die gekrümmte Bahn hat in einem, vorzugsweise in mehreren Punkten eine Krümmung, die nicht gleich Null ist. Die gekrümmte Bahn kann kreisförmig sein, die Krümmung kann aber auch in verschiedenen Kurvenpunkten unterschiedlich sein.

Dadurch, dass großer Einfluss auf die Position und/oder Orientierung der Haube innerhalb der Endlagen genommen werden kann, kann die Vorrichtung derart ausgelegt werden, dass sie besonders geeignet ist, eine Haube unter beengten Platzverhältnissen oder innerhalb eines bestimmten vorgegebenen Raums zu führen. Es ist möglich, Bauraum besonders günstig auszunutzen. In einer Ausführungsform wird durch die Auslegung der gekrümmten Bahn oder Führungsbahn in Verbindung mit einer verschiebbaren Abstützung ein Hindernis umgangen. Vorzugsweise ist die gekrümmte Bahn derart ausgelegt, dass die Haube zwischen einer geschlossenen und einer offenen Stellung relativ zum Maschinenrahmen verschoben und gleichzeitig angehoben werden kann. Dabei hat die gekrümmte Bahn vorzugsweise eine in Öffnungsrichtung ansteigende Form. Unter "in Öffnungsrichtung ansteigend" wird hierbei verstanden, dass sich die gekrümmte Bahn bei einer mobilen Arbeitsmaschine, die sich in einer Lage befindet, in der sie typischerweise eingesetzt wird, in Öffnungsrichtung von einer idealisierten ebenen Erdoberfläche entfernt. Dadurch kann die Haube beim Öffnen angehoben werden. Es ist auch möglich, die gekrümmte Bahn derart auszulegen, dass sie sich in Öffnungsrichtung vertikal erstreckt. Dadurch kann die Haube beim Öffnen seitlich verschoben werden.

Das Angriffselement ist vorzugsweise als Rolle ausgebildet.

Der Antrieb der Haube erfolgt vorzugsweise händisch.

In einer bevorzugten Ausführungsform ist die mobile Arbeitsmaschine eine Baumaschine. Dadurch können begrenzte Bauräume bei Baumaschinen besser genutzt werden.

Baumaschinen sind stationäre, semimobile oder mobile Maschinen, die vorzugsweise mit Verbrennungsmotoren oder Elektromotoren angetrieben werden und mit denen Baustoffe be- oder verarbeitet, Bauhilfsstoffe transportiert oder Bauaufgaben ausgeführt werden. Eine Baumaschine kann beispielsweise ein Bagger, ein Kompaktasphaltfertiger oder ein Verdichtungsgerät sein.

Es ist bevorzugt, dass das Führungselement derart angeordnet ist, dass es sich innerhalb der Haube und/oder des Maschinenrahmens befindet, wenn sich die Haube in der geschlossenen Position befindet. Die Gefahr von Beschädigungen oder Verschmutzungen des Führungselements kann auf diese Weise verringert werden. Außerdem kann die Verletzungsgefahr eines Bedieners der Arbeitsmaschine oder von Passanten dadurch verringert werden.

Die Vorrichtung kann besonders robust und störungsunempfindlich ausgeführt werden, indem das Führungselement als Schwenkhebel ausgebildet ist, der in einem Anlenkpunkt gelenkig mit dem Maschinenrahmen verbunden ist und das Angriffselement mit der Haube verbunden ist. In einer Ausführungsform ist das Führungselement als Schwenkhebel ausgebildet, der gelenkig mit der Haube verbunden ist und das Angriffselement ist mit dem Maschinenrahmen verbunden. Dabei ist der Schwenkhebel vorzugsweise als führendes Glied eines Führungsgetriebes ausgebildet.

Ein Schwenkhebel ist ein Bauteil, das eingerichtet ist, mit zwei anderen Bauteilen gelenkig verbunden zu werden.

In einer besonders bevorzugten Ausführungsform verläuft eine Lotrechte durch das Angriffselement in der offenen Position in Öffnungsrichtung vor einer Lotrechten durch den Anlenkpunkt wenn sich die mobile Arbeitsmaschine in einer Lage befindet, in der sie typischerweise eingesetzt wird. Dadurch kann erreicht werden, dass die Haube von selbst in der offenen Position bleibt, wenn sie diese einmal eingenommen hat. Bei dieser Anordnung wirkt die Gewichtskraft der Haube in der offenen Position nicht derart, dass sie eine Positionsänderung der Haube zu der geschlossenen Position unterstützt. Zweckmäßigerweise hat der Schwerpunkt der Haube in geöffnetem Zustand den Totpunkt überwunden.

In einer Ausführungsform ist ein Rasthaken vorgesehen, der eingerichtet ist, die Haube im geöffneten Zustand zu fixieren und/oder sie gegen Störgrößen, wie z.B. Windlasten zu sichern.

Bei einer bevorzugten Weiterbildung ist eine Feder mit einem ersten Ende an dem Schwenkhebel zwischen dem Angriffselement und dem Anlenkpunkt und mit einem zweiten Ende an dem Maschinenrahmen derart angebracht, dass sie eine Kraft erzeugt, die ein Öffnen der Haube unterstützt, wenn sich die Haube nicht in der offenen Position befindet. Durch die Federkraftunterstützung des Schwenkhebels kann das Öffnen der Haube erleichtert werden.

Als Feder kann eine Zugfeder, eine Druckfeder, eine Schenkelfeder o.ä. eingesetzt werden. Die Anbringung der Feder kann daran angepasst werden, welcher Federtyp eingesetzt wird. Vorzugsweise wird eine Schraubenfeder eingesetzt. Auf diese Weise ist es möglich über eine vergleichsweise lange Strecke eine Zugspannung bereitzustellen. Es kann auch eine Tellerfeder eingesetzt werden. Dabei ist die Tellerfeder besonders geeignet um die Haube zumindest etwas aus der geschlossenen Position herauszubewegen, so dass ein Bediener die Haube besser fassen kann.

Die Anordnung der Feder erfolgt vorzugsweise derart, dass die Spannung beim Öffnen der Haube in jeder Position zwischen der geschlossenen Position und der vollständig geöffneten Position in eine Richtung wirkt, die das Öffnen unterstützt.

In einer bevorzugten Ausführungsform ist eine Feder mit einem ersten Ende in einem Bereich des Schwenkhebels, der sich auf einer Seite des Anlenkpunkts befindet, die von dem Angriffselement weg weist und mit einem zweiten Ende an dem Maschinenrahmen derart angebracht, dass sie eine Kraft erzeugt, die ein Öffnen der Haube unterstützt, wenn sich die Haube nicht in der offenen Position befindet. Auch auf diese Weise kann das Öffnen der Haube erleichtert werden, indem der Schwenkhebel durch Federkraft unterstützt wird.

Auf einer Seite des Anlenkpunkts, die von dem Angriffselement weg weist, befindet sich das erste Ende der Feder, wenn es sich auf einer von dem Anlenkpunkt abgewandten Seite einer gedachten ersten Geraden befindet, die durch den Anlenkpunkt verläuft und rechtwinklig zu einer gedachten zweiten Geraden ist, die durch Anlenkpunkt und Angriffselement verläuft.

Eine besonders große Unterstützung der Öffnung kann erreicht werden, indem mehrere Federn wie oben beschrieben eingesetzt werden, wobei eine Feder an dem Schwenkhebel zwischen dem Angriffselement und dem Anlenkpunkt und eine zweite Feder in einem Bereich des Schwenkhebels, der sich auf der Seite des Anlenkpunkts befindet, die von dem Angriffselement weg weist, angeordnet ist.

Wenn mehr als ein Schwenkhebel vorgesehen ist, ist es bevorzugt, dass ein Verbindungssteg vorgesehen ist, der mehrere Schwenkhebel miteinander verbindet. Durch diese Maßnahme kann ein besserer Gleichlauf der Schwenkhebel erreicht werden. Dabei ist der Verbindungssteg vorzugsweise nicht beweglich zu den Schwenkhebeln. Besonders bevorzugt sind mehrere Schwenkhebel an gegenüberliegenden Seiten der Haube angeordnet.

In einer bevorzugten Ausführungsform ist das Führungselement ortsfest zu dem Maschinenrahmen und das Angriffselement ist mit der Haube verbunden oder das Führungselement ist ortsfest zu der Haube und das Angriffselement ist mit dem Maschinenrahmen verbunden, wobei Angriffselement und Führungselement jeweils relativ zu einander entlang der Führungsform bewegbar sind. Dadurch bestehen besonders große Freiheiten bei der Festlegung der gekrümmten Bahn. Dabei ist es vorteilhaft, wenn die Führungsform starr mit dem Maschinenrahmen verbunden ist.

Die Führungsform ist derart geformt, dass die gekrümmte Bahn darin abgebildet ist. Wenn das Führungselement ortsfest zu dem Maschinenrahmen ist, ist die Führungsform in einer bevorzugten Ausführungsform von der gekrümmten Bahn beabstandet.

Das Angriffselement umfasst vorzugsweise eine Rolle. Besonders bevorzugt weist das Angriffselement ein Gleitlager auf. Dadurch kann das Gleiten des Angriffselements auf einfache Weise leichtgängig realisiert werden.

Das Führungselement kann beispielsweise einen runden oder flachen Querschnitt aufweisen. Es ist auch möglich, das Führungselement komplexer aufzubauen, um das Angriffselement besonders sicher führen zu können, zum Beispiel, indem ein Rohr mit zwei dieses Rohr umfassenden Schienen kombiniert wird. In diesem Fall ist das Angriffselement vorzugsweise als Rollenpaar ausgebildet, wobei die beiden Rollen jeweils zwischen dem Rohr und einer Schiene angeordnet sind.

Bei einer besonders bevorzugten Weiterbildung ist die Führungsform ein Hohlraum und das Angriffselement ist eingerichtet, in den Hohlraum einzugreifen. Dabei ist es zweckmäßig, wenn das Angriffselement derart ausgestaltet ist, dass es eingerichtet ist, in dem Hohlraum entlang einer Bahn, die der gekrümmten Bahn entspricht, zu gleiten. Führungselement und Angriffselement können so auf besonders einfache Weise ausgestaltet werden. Vorzugsweise umfasst das Führungselement eine Schiene, die eine C-Form aufweist. Besonders bevorzugt umfasst das Führungselement ein gebogenes C-Profil. In diesem Fall ist das Angriffselement zweckmäßigerweise derart ausgestaltet, dass es eingerichtet ist, in dem C-förmigen Hohlraum zu gleiten. Wenn das Führungselement ein Blech aufweist, das mit einem Langloch versehen ist, kann die gekrümmte Bahn besonders gut an einen vorgegebenen Bauraum angepasst werden. Wenn das Führungselement als Stange aus Rundmaterial oder Rohr ausgebildet ist, kann es auf besonders einfache Weise bereitgestellt werden. Dabei wird vorzugsweise Material mit einem Durchmesser von 5 bis 50 mm eingesetzt.

In einer Weiterbildung ist das Führungselement eine Führungsschiene und das Angriffselement weist ein Rollenpaar auf, das eingerichtet ist, außen an der Führungsschiene entlang bewegt zu werden. Dadurch können hohe Kräfte beim Bewegen der Haube auf komfortable Weise aufgenommen werden, so dass die Haube gut beweglich ist. Durch eine Lagerung des Rollenpaars mit Gleitlagern kann die Lagerung auf besonders einfache Weise realisiert werden. Durch eine Lagerung des Rollenpaars mit Wälzlagern kann eine besonders leichtgängige Führung verwirklicht werden.

Ein besonderer Vorteil kann erzielt werden, wenn die Führungsform in einem Bereich, in . dem sich das Angriffselement befindet, wenn die Haube geöffnet ist, eine Mulde aufweist. Dadurch kann erreicht werden, dass die Haube von selbst in der offenen Position bleibt, wenn sie diese einmal eingenommen hat. Alternativ oder zusätzlich kann die Führungsform auch eine Erhebung aufweisen. Diese ist dann zweckmäßigerweise zwischen dem Bereich, in dem sich das Angriffselement befindet, wenn die Haube geöffnet ist und einem Bereich des Führungselements angeordnet, der eingerichtet ist, das Angriffselement zu einer Position zu führen, in der es sich bei geschlossener Haube befindet, angeordnet.

Bevorzugt ist eine Haubenschwenkvorrichtung zum Verschwenken einer Haube einer mobilen Arbeitsmaschine, die eine erste Vorrichtung aufweist, bei der das Führungselement als Schwenkhebel ausgebildet ist, der in einem Anlenkpunkt gelenkig mit dem Maschinenrahmen verbunden ist und das Angriffselement mit der Haube verbunden ist, oder der Schwenkhebel in einem Anlenkpunkt gelenkig mit der Haube verbunden ist und das Angriffselement mit dem Maschinenrahmen verbunden ist und eine zweite Vorrichtung aufweist, bei der das Führungselement ortsfest zu dem Maschinenrahmen ist und eine Führungsform aufweist, die der gekrümmten Bahn entspricht und das Angriffselement mit der Haube verbunden ist oder das Führungselement ortsfest zu der Haube ist und eine Führungsform aufweist, die der gekrümmten Bahn entspricht und das Angriffselement mit dem Maschinenrahmen verbunden ist, wobei Angriffselement und Führungselement jeweils relativ zu einander entlang dieser Führungsform bewegbar sind. Dadurch kann in weiten Teilen Einfluss auf die Position und/oder Orientierung der Haube innerhalb der Endlagen genommen werden. Gleichzeitig kann die Gewichtskraft der Haube gut aufgenommen werden, so dass diese gut beweglich ist.

Eine Haubenschwenkvorrichtung, die mehrere Schwenkhebel, die in einem Anlenkpunkt gelenkig mit dem Maschinenrahmen verbunden sind und gelenkig mit diesen verbundene Angriffselemente, die mit der Haube verbunden sind, aufweist, kann besonders gut hohe Gewichtskräfte der Haube aufnehmen. Das Gleiche gilt für eine Haubenschwenkvorrichtung, die mehrere Schwenkhebel, die in einem Anlenkpunkt gelenkig mit der Haube verbunden sind und gelenkig mit diesen verbundene Angriffselemente, die mit dem Maschinenrahmen verbunden sind, aufweist.

Bei einer Haubenschwenkvorrichtung, die mehrere Führungselemente, die ortsfest zu dem Maschinenrahmen sind und Führungsformen aufweisen, die einer gekrümmten Bahn entsprechen und entsprechende Angriffselemente, die mit der Haube verbunden sind, aufweist, wobei die jeweiligen Angriffselemente und Führungselemente relativ zu einander entlang diesen Führungsformen bewegbar sind, kann die Bahn, auf der Bewegungen der Haube zugelassen werden, besonders gut an einen vorgegebenen Bauraum angepasst werden. Das Gleiche gilt für eine Haubenschwenkvorrichtung, die mehrere Führungselemente, die ortsfest zu der Haube sind und Führungsformen aufweisen, die einer gekrümmten Bahn entsprechen und entsprechende Angriffselemente, die mit dem Maschinenrahmen verbunden sind, aufweist, wobei Angriffselement und Führungselement relativ zu einander entlang dieser Führungsform bewegbar sind. Die Bahn, auf der Bewegungen der Haube zugelassen werden, kann auch besonders gut an einen vorgegebenen Bauraum angepasst werden, wenn eine Haubenschwenkvorrichtung mehrere Führungselemente und Angriffselemente aufweist, wobei die beiden oben in Bezug auf die Zuordnung der Führungselemente und Angriffselemente zu Maschinenrahmen und Haube beschriebenen Anordnungen miteinander kombiniert werden.

Bevorzugte Ausführungsformen der Erfindung werden nachfolgend anhand der beigefügten Zeichnungen näher erläutert. Es zeigen
- Fig. 1: eine Vorrichtung zum Führen einer Haube einer mobilen Arbeitsmaschine, wobei die Haube geschlossen ist,
- Fig. 2: die in Figur 1 gezeigte Vorrichtung zum Führen der Haube der mobilen Arbeitsmaschine, wobei sich die Haube in einem halb geöffneten Zustand befindet und
- Fig. 3: die in Figur 1 gezeigte Vorrichtung zum Führen der Haube der mobilen Arbeitsmaschine, wobei die Haube geöffnet ist.

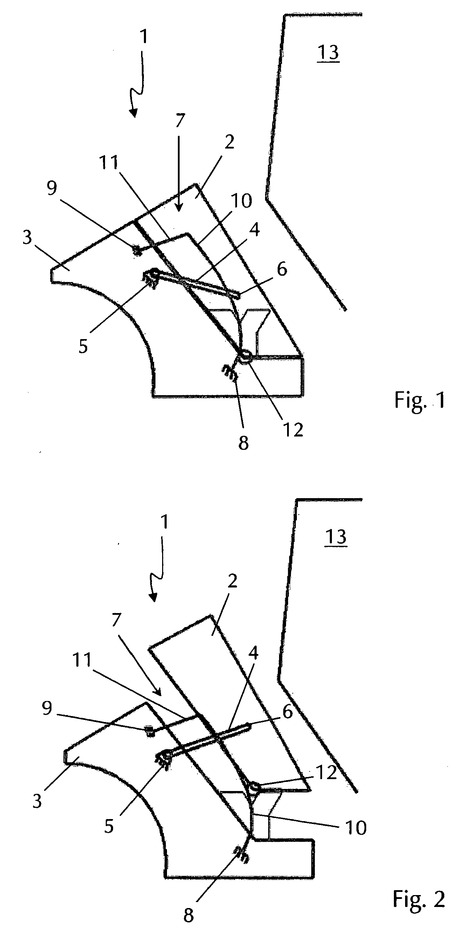

Figur 1 zeigt eine Vorrichtung 1 zum Führen einer Haube 2 einer mobilen Arbeitsmaschine. In dieser Figur ist die Haube 2 in geschlossenem Zustand dargestellt, das heißt, die Haube 2 liegt an dem Maschinenrahmen 3 der mobilen Arbeitsmaschine, die hier eine Tandemvibrationswalze ist, an.

Mit dem Maschinenrahmen 3 ist ein Schwenkhebel 4 durch ein Drehgelenk verbunden. Dazu ist in dem Verbindungsbereich ein erstes Kugellager 5 vorgesehen. Ein zweiter Bereich des Schwenkhebels 4 ist durch ein Drehgelenk mit der Haube 2 verbunden. Dazu ist in diesem zweiten Bereich ein zweites Kugellager 6 vorgesehen. In der geschlossenen Position der Haube 2 ist der Schwenkhebel 4 in einer Lage, in der sich das zweite Kugellager 6 unterhalb des ersten Kugellagers 5 befindet.

An dem Maschinenrahmen 3 ist weiterhin eine Führungsschiene 7 angebracht. Dazu ist sie in ihren Endpunkten 8 und 9 mit dem Maschinenrahmen 3 verschraubt. Die Führungsschiene 7 ist als Rohr ausgebildet und bildet einen ersten gekrümmten Bereich 10 und einen zweiten geraden Bereich 11, die miteinander verbunden sind und in dem Verbindungspunkt einen Winkel von 95° bilden. An der Haube 2 ist eine Rolle 12 vorgesehen, die eingerichtet ist, in der Vertiefung des Rohrs der Führungsschiene 7 verschoben zu werden. In der geschlossenen Position der Haube 2 befindet sich die Rolle 12 nahe dem ersten Endpunkt 8 der Führungsschiene 7.

Benachbart zu der Haube 2 befindet sich ein Führerhaus 13.

Figur 2 zeigt die in Figur 1 gezeigte Vorrichtung 1 zum Führen der Haube 2 der mobilen Arbeitsmaschine, wobei sich die Haube 2 in einem halb geöffneten Zustand befindet.

Die Haube 2 befindet sich in einer Lage, in der sie parallel zu der in Figur 1 gezeigten Lage nach oben und etwas von dem Führerhaus 13 weg verschoben ist.

Der Schwenkhebel 4 ist in einer Lage, in der sich das zweite Kugellager 6 oberhalb des ersten Kugellagers 5 befindet.

Die Rolle 12 befindet sich etwa in der Mitte des ersten gekrümmten Bereichs 10 der Führungsschiene 7.

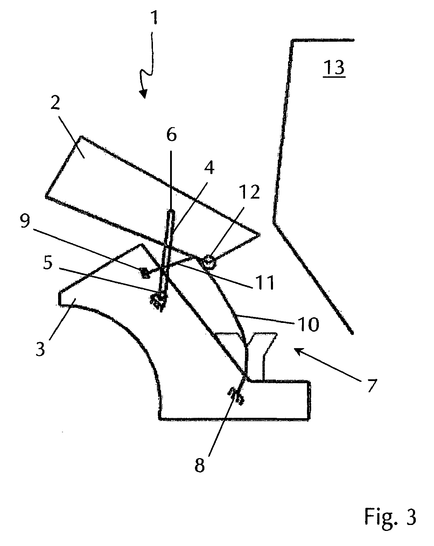

Figur 3 zeigt die in Figur 1 gezeigte Vorrichtung 1 zum Führen der Haube 2 der mobilen Arbeitsmaschine, wobei die Haube 2 geöffnet ist.

Die Haube 2 befindet sich in einer Lage, in der sie nahezu ganz aus dem Bereich zwischen Maschinenrahmen 3 und Führerhaus 13 heraus bewegt worden ist. Dabei ist die Haube 2 im Vergleich zu den in Figur 1 und Figur 2 gezeigten Lagen gedreht worden.

Der Schwenkhebel 4 ist in einer Lage, in der sich das zweite Kugellager 6 oberhalb des ersten Kugellagers 5 befindet. Das zweite Kugellager 6 befindet sich jedoch im Vergleich zu Figur 2 in einer noch höheren Position.

Die Rolle 12 befindet sich in dem ersten gekrümmten Bereich 10 der Führungsschiene 7 benachbart zu dem Winkel von 95°.

Die Haube 2 wird sowohl durch den Schwenkhebel 4 als auch durch die Führungsschiene 7 geführt. Dadurch, dass sich die Rolle 12 in der Führungsschiene 7 befindet, ist für den Bereich der Haube 2, der direkt mit der Rolle 12 verbunden ist genau vorgegeben, dass er auf der Bahn beweglich ist, die das Rohr vorgibt. Der Bereich der Haube 2, der direkt mit dem Kugellager 6 verbunden ist, kann auf einer kreisförmigen Bahn um das Kugellager 5 bewegt werden. Die möglichen Positionen der übrigen Punkte der Haube 2 ergeben sich daraus. Die Haube 2 wird hier beim Öffnen zunächst aus dem Bereich zwischen Maschinenrahmen 3 und Führerhaus 13 hinausgeführt und dann gedreht. Beim Schließen wird die Haube 2 entsprechend bewegt.

Dadurch, dass die Haube 2 zunächst im Wesentlichen parallel zu sich selbst verschoben und erst danach gedreht wird, ist es möglich, die Haube 2 auch in einem beengten Bauraum zu öffnen. Es ist daher möglich, die mobile Arbeitsmaschine derart zu konstruieren, dass der Platz zwischen der Haube 2 und dem Führerhaus 13 relativ eng ist.

Diese spezielle Art der Führung einer Haube 2 kann besonders gut an die Gegebenheiten eines Bauraums angepasst werden. Es kann sehr genau vorgegeben werden, wie die Haube durch einen beengten Bauraum geführt werden kann.

Zur Fixierung der Haube 2 im geöffneten Zustand ist ein Rasthaken vorhanden, so dass sie gegen Störgrößen, wie beispielsweise Windlasten, gesichert sind.

## Patentansprüche

1. Vorrichtung (1) zum Führen einer Haube (2) einer mobilen Arbeitsmaschine, wobei die mobile Arbeitsmaschine einen Maschinenrahmen (3) aufweist,
die Haube (2) relativ zu dem Maschinenrahmen (3) zwischen einer offenen und einer geschlossenen Position bewegbar ist,
die Vorrichtung ein Angriffselement (6, 12) und ein Führungselement (4, 7) umfasst, das Angriffselement (6, 12) und das Führungselement (4, 7) gelenkig miteinander verbunden sind, das Angriffselement (6, 12) mit der Haube (2) verbunden ist und das Führungselement (4, 7) mit dem Maschinenrahmen (3) verbunden ist oder das Angriffselement (6, 12) mit dem Maschinenrahmen (3) verbunden ist und das Führungselement (4, 7) mit der Haube (2) verbunden ist,
**dadurch gekennzeichnet, dass**
das Führungselement (4, 7) eingerichtet ist, einen Punkt der Haube (2) auf einer gekrümmten Bahn zu führen, wobei die Haube als geführtes Glied ausgebildet ist und auf einer der gekrümmten Bahn entsprechenden Führungsform verschiebbar gelagert ist.

2. Vorrichtung (1) nach Anspruch 1
**dadurch gekennzeichnet, dass**
die mobile Arbeitsmaschine eine Baumaschine ist.

3. Vorrichtung (1) nach einem der vorhergehenden Ansprüche,
**dadurch gekennzeichnet, dass**
das Führungselement (4, 7) derart angeordnet ist, dass es sich innerhalb der Haube (2) und/oder des Maschinenrahmens (3) befindet, wenn sich die Haube (2) in der geschlossenen Position befindet.

4. Vorrichtung (1) nach einem der vorhergehenden Ansprüche,
**dadurch gekennzeichnet, dass**
das Führungselement (4, 7) ein Schwenkhebel (4) ist, der in einem Anlenkpunkt gelenkig mit dem Maschinenrahmen (3) verbunden ist und das Angriffselement (12) mit der Haube (2) verbunden ist.

5. Vorrichtung (1) nach Anspruch 4,
**dadurch gekennzeichnet, dass**
eine Lotrechte durch das Angriffselement (12) in der offenen Position in Öffnungsrichtung vor einer Lotrechten durch den Anlenkpunkt verläuft, wenn sich die mobile Arbeitsmaschine in einer Lage befindet, in der sie typischerweise eingesetzt wird.

6. Vorrichtung (1) nach einem der Ansprüche 4 oder 5,
**dadurch gekennzeichnet, dass**
eine Feder mit einem ersten Ende an dem Schwenkhebel (4) zwischen dem Angriffselement (12) und dem Anlenkpunkt und mit einem zweiten Ende an dem Maschinenrahmen (3) derart angebracht ist, dass sie eine Kraft erzeugt, die ein Öffnen der Haube (2) unterstützt, wenn sich die Haube (2) nicht in der offenen Position befindet.

7. Vorrichtung (1) nach einem der Ansprüche 4 bis 6,
**dadurch gekennzeichnet, dass**
eine Feder mit einem ersten Ende in einem Bereich des Schwenkhebels (4), der sich auf einer Seite des Anlenkpunkts befindet, die von dem Angriffselement (12) weg weist und mit einem zweiten Ende an dem Maschinenrahmen (3) derart angebracht ist, dass sie eine Kraft erzeugt, die ein Öffnen der Haube (2) unterstützt, wenn sich die Haube (2) nicht in der offenen Position befindet.

8. Vorrichtung (1) nach einem der Ansprüche 4 bis 7,
**dadurch gekennzeichnet, dass**
ein Verbindungssteg vorgesehen ist, der mehrere Schwenkhebel (4) miteinander verbindet.

9. Vorrichtung (1) nach einem der vorhergehenden Ansprüche,
**dadurch gekennzeichnet, dass**
das Führungselement (7) ortsfest zu dem Maschinenrahmen (3) ist und eine Führungsform aufweist, die der gekrümmten Bahn entspricht und das Angriffselement (12) mit der Haube (2) verbunden ist oder das Führungselement (7) ortsfest zu der Haube (2) ist und eine Führungsform aufweist, die der gekrümmten Bahn entspricht und das Angriffselement (12) mit dem Maschinenrahmen (3) verbunden ist, wobei Angriffselement (12) und Führungselement (7) jeweils relativ zu einander entlang dieser Führungsform bewegbar sind.

10. Vorrichtung (1) nach Anspruch 9,
**dadurch gekennzeichnet, dass**
die Führungsform ein Hohlraum ist und das Angriffselement (12) eingerichtet ist, in den Hohlraum einzugreifen.

11. Vorrichtung (1) nach Anspruch 9 oder 10,
**dadurch gekennzeichnet, dass**
das Führungselement (7) eine Führungsschiene ist und das Angriffselement (12) ein Rollenpaar aufweist, das eingerichtet ist, außen an der Führungsschiene entlang bewegt zu werden.

12. Vorrichtung (1) nach einem der Ansprüche 9 bis 11,
**dadurch gekennzeichnet, dass**
die Führungsform in einem Bereich, in dem sich das Angriffselement (12) befindet, wenn die Haube (2) geöffnet ist, eine Mulde aufweist.

13. Haubenschwenkvorrichtung zum Verschwenken einer Haube (2) einer mobilen Arbeitsmaschine,
**dadurch gekennzeichnet, dass**
sie eine erste Vorrichtung (1) nach einem der Ansprüche 4 bis 8 und eine zweite Vorrichtung (1) nach einem der Ansprüche 9 bis 12 umfasst.

14. Vorrichtung (1) nach einem der vorhergehenden Ansprüche,
**dadurch gekennzeichnet, dass**
ein Rasthaken zur Fixierung der Haube (2) im geöffneten Zustand vorhanden ist.

## Claims

1. Device (1) for guiding a hood (2) of a mobile work machine, the mobile work machine comprising a machine frame (3),
the hood (2) being moveable relative to the machine frame (3) between an open and a closed position,
the device comprising an engagement member (6, 12) and a guide member (4, 7), the engagement member (6, 12) and the guide member (4, 7) being connected to one another in an articulated fashion, the engagement member (6, 12) being connected to the hood (2) and the guide member (4, 7) being connected to the machine frame (3), or the engagement member (6, 12) being connected to the machine frame (3) and the guide member (4, 7) being connected to the hood (2),
**characterized in that**
the guide member (4, 7) is configured to guide a point on the hood (2) on a curved path, the hood being configured as a guided member and being mounted so as to be displaceable on a guide form corresponding to the curved path.

2. The device (1) according to claim 1,
**characterized in that**
the mobile work machine is a construction machine.

3. The device (1) according to any one of the preceding claims,
**characterized in that**
the guide member (4, 7) is arranged such that it is located within the hood (2) and/or the machine frame (3) when the hood (2) is in the closed position.

4. The device (1) according to any one of the preceding claims,
**characterized in that**
the guide member (4, 7) is a pivot lever (4) which is articulated to the machine frame (3) via an articulation point and the engagement member (12) is connected to the hood (2).

5. The device (1) according to claim 4,
**characterized in that**
a perpendicular runs through the engagement member (12) in the open position in the opening direction in front of a perpendicular through the articulation point when the mobile work machine is a position in which it is typically used.

6. The device (1) according to any one of claims 4 or 5,
**characterized in that**
a spring is mounted with a first end on the pivot lever (4) between the engagement member (12) and the articulation point and with a second end on the machine frame (3) in such a way that it generates a force which supports opening of the hood (2) when the hood (2) is not in the open position.

7. The device (1) according to any one of claims 4 to 6,
**characterized in that**
a spring is mounted with a first end in a region of the pivot lever (4) which is located on a side of the articulation point facing away from the engagement member (12), and with a second end on the machine frame (3) in such a way that it generates a force which supports opening of the hood (2) when the hood (2) is not in the open position.

8. The device (1) according to any one of claims 4 to 7,
**characterized in that**
a connecting bar is provided which connects multiple pivot levers (4) to one another.

9. The device (1) according to any one of the preceding claims,
**characterized in that**
the guide member (7) is stationary to the machine frame (3) and has a guide form that corresponds to the curved path and the engagement member (12) is connected to the hood (2), or the guide member (7) is stationary to the hood (2) and has a guide form that corresponds to the curved path and the engagement member (12) is connected to the machine frame (3), the engagement member (12) and the guide member (7) in each case being moveable relative to one another along said guide form.

10. The device (1) according to claim 9,
**characterized in that**
the guide form is a cavity and the engagement member (12) is configured to engage the cavity.

11. The device (1) according to claim 9 or 10,
**characterized in that**
the guide member (7) is a guide rail and the engagement member (12) comprises a roller pair which is configured to be moved along the guide rail on the outside thereof.

12. The device (1) according to any one of claims 9 to 11,
**characterized in that**
the guide form has a depression in a region in which the engagement member (12) is located when the hood (2) is open.

13. Hood pivoting device for pivoting a hood (2) of a mobile work machine,
**characterized in that**
it comprises a first device (1) according to any one of claims 4 to 8 and a second device (1) according to any one of claims 9 to 12.

14. The device (1) according to any one of the preceding claims,
**characterized in that**
a latch hook for fixing the hood (2) in the open state is provided.

## Revendications

1. Dispositif (1) pour guider un capot (2) d'une machine de travail mobile, la machine de travail mobile comprenant un châssis (3) de machine,
le capot (2) étant mobile par rapport au châssis (3) de machine entre une position ouverte et une position fermée,
le dispositif comprenant un élément d'engagement (6, 12) et un élément de guidage (4, 7), l'élément d'engagement (6, 12) et l'élément de guidage (4, 7) étant raccordés l'un à l'autre de manière articulée, l'élément d'engagement (6, 12) étant raccordé au capot (2) et l'élément de guidage (4, 7) étant raccordé au châssis (3) de machine, ou bien l'élément d'engagement (6, 12) étant raccordé au châssis (3) de machine et l'élément de guidage (4, 7) étant raccordé au capot (2),
**caractérisé en ce que**
l'élément de guidage (4, 7) est configuré pour guider un point sur le capot (2) sur un trajet incurvé, le capot étant configuré comme un élément guidé et étant monté de manière à pouvoir être déplacé sur une forme de guidage correspondant au trajet incurvé.

2. Dispositif (1) selon la revendication 1,
**caractérisé en ce que**
la machine de travail mobile est un engin de chantier.

3. Dispositif (1) selon l'une quelconque des revendications précédentes,
**caractérisé en ce que**
l'élément de guidage (4, 7) est agencé de telle sorte qu'il soit situé dans le capot (2) et/ou le châssis (3) de machine lorsque le capot (2) est en position fermée.

4. Dispositif (1) selon l'une quelconque des revendications précédentes,
**caractérisé en ce que**
l'élément de guidage (4, 7) est un levier oscillant (4) qui est articulé au châssis (3) de machine via un point d'articulation et l'élément d'engagement (12) est raccordé au capot (2).

5. Dispositif (1) selon la revendication 4,
**caractérisé en ce que**
une verticale traverse l'élément d'engagement (12) dans la position ouverte dans le sens de l'ouverture avant une verticale traversant le point d'articulation lorsque la machine de travail mobile est dans une position dans laquelle elle est typiquement utilisée.

6. Dispositif (1) selon l'une quelconque des revendications 4 ou 5,
**caractérisé en ce que**
un ressort est monté avec une première extrémité sur le levier oscillant (4) entre l'élément d'engagement (12) et le point d'articulation, et avec une seconde extrémité sur le châssis (3) de machine, d'une manière telle qu'il génère une force aidant à l'ouverture du capot (2) lorsque le capot (2) n'est pas dans la position ouverte.

7. Dispositif (1) selon l'une quelconque des revendications 4 à 6,
**caractérisé en ce que**
un ressort est monté avec une première extrémité dans une zone du levier oscillant (4) qui est située sur un côté du point d'articulation à l'opposé de l'élément d'engagement (12), et avec une seconde extrémité sur le châssis (3) de machine d'une manière telle qu'il génère une force aidant à l'ouverture du capot (2) lorsque le capot (2) n'est pas dans la position ouverte.

8. Dispositif (1) selon l'une quelconque des revendications 4 à 7,
**caractérisé en ce que**
une barre de liaison est prévue, qui raccorde les divers leviers oscillants (4) entre eux.

9. Dispositif (1) selon l'une quelconque des revendications précédentes,
**caractérisé en ce que**
l'élément de guidage (7) est immobilisé sur le châssis (3) de machine et présente une forme de guidage qui correspond au trajet incurvé, et l'élément d'engagement (12) est raccordé au capot (2), ou bien l'élément de guidage (7) est immobilisé sur le capot (2) et présente une forme de guidage qui correspond au trajet incurvé et l'élément d'engagement (12) est raccordé au châssis (3) de machine, l'élément d'engagement (12) et l'élément de guidage (7) étant dans chaque cas mobiles l'un par rapport à l'autre le long de ladite forme de guidage.

10. Dispositif (1) selon la revendication 9,
**caractérisé en ce que**
la forme de guidage est un corps creux et l'élément d'engagement (12) est configuré pour s'engager dans le corps creux.

11. Dispositif (1) selon la revendication 9 ou 10,
**caractérisé en ce que**
l'élément de guidage (7) est un rail de guidage et l'élément d'engagement (12) comprend une paire de galets qui est configurée pour être déplacée le long du rail de guidage à l'extérieur de celui-ci.

12. Dispositif (1) selon l'une quelconque des revendications 9 à 11,
**caractérisé en ce que**
la forme de guidage présente une dépression dans une zone dans laquelle est situé l'élément d'engagement (12) lorsque le capot (2) est ouvert.

13. Dispositif de pivotement d'un capot pour faire pivoter un capot (2) d'une machine de travail mobile,
**caractérisé en ce que**
il comprend un premier dispositif (1) selon l'une quelconque des revendications 4 à 8 et un second dispositif (1) selon l'une quelconque des revendications 9 à 12.

14. Dispositif (1) selon l'une quelconque des revendications précédentes,
**caractérisé en ce que**
un crochet de verrouillage pour immobiliser le capot (2) en position ouverte est prévu.
